# EUROPEAN PATENT SPECIFICATION

(11) **EP 3 911 560 B1**
(45) Date of publication and mention of the grant of the patent: **01.05.2024**
(21) Application number: 20707806.4
(22) Date of filing: 20.01.2020
(51) Int. Cl.: B62J 9/23, B62J 9/24, B62J 9/27, B62J 9/30, A45C 13/18, A45C 13/10, A45C 5/03

(54) **STORAGE CASE FOR A MOTORCYCLE**
AUFBEWAHRUNGSKASTEN FÜR EIN MOTORRAD
COFFRE DE RANGEMENT POUR MOTOCYCLETTE

(30) Priority: 18.01.2019 EP 19382035
(43) Date of publication of application: 24.11.2021
(73) Proprietor: NAD, S.L., 08100 Mollet del Vallès (ES)
(72) Inventor: AYALA GONZALEZ, Pedro, 08100 Mollet del Vallès (Barcelona) (ES)
(74) Representative: Ponti & Partners, S.L.P
(86) International application number: PCT/IB2020/050414
(87) International publication number: WO 2020/148733

(56) References cited:
- EP-A1- 0 709 283
- DE-A1- 4 230 972
- IT-A1- MI20 090 695
- US-A- 5 439 149
- US-A1- 2003 150 894

## Description

This invention refers to a storage case for a motorcycle intended to be fixed laterally or superiorly on to the rear part of a motorcycle chassis.

### Background of the invention

There are known storage cases of different configurations designed to be coupled to the back part of motorcycles, a base body as a container, an articulated lid to this base body, articulated lid closing and opening means, and an articulated handle on the base body of the storage case that is operatively connected to a retaining element arranged to fasten the storage case to the chassis of the motorcycle.

The storage cases described above may be placed horizontally coupled to a support attached to the top rear of the motorcycle chassis or placed vertically coupled to a support attached to one side of the rear of the motorcycle chassis. In any case, these storage cases always incorporate means for removable coupling to a support of the motorcycle chassis.

Patent US 5439149A describes a storage case of the type mentioned above that incorporates a first articulated handle on the base body of the storage case that is operationally connected to a retaining element arranged to fasten the storage case to the motorcycle chassis in such a way that the actuation of the handle into a retracted position displaces the retaining element to engage in a support into the motorcycle chassis. The same storage case incorporates a second articulated handle on the base body of the storage case that is operationally connected to a lid fastening element. Both handles are mounted in such a way that they can rotate around a common pivot axis to make it easier to carry the case. The base body of the storage case includes a key lock to lock the actuation of both handles.

The storage case for a motorcycle described in the previous patent document has the peculiar characteristic of allowing the user to couple and uncouple the storage case to the chassis of the motorcycle by actuating the handle which attaches the storage case itself. That results very comfortable, especially for heavy cases of heavier weight, as it is the case for storage cases including metal walls (for example, aluminium cases). However, the safety of the storage case described in the previous patent can be improved, since if the user incorrectly positions the handle linked to the retaining element, or, for example, forgets to lock the key lock that locks the handle, the storage case can be accidentally uncoupled during the driving of the motorcycle.

Patent DE4230972A1 discloses a storage case according to the preamble of claim 1 which comprises an unlocking lever which is used to uncouple the storage case from the chassis of the motorcycle and a holding handle which in its rest position is locked by a lock and covers the unlocking lever so that this unlocking lever remains inaccessible. The holding handle may be pivoted to a lifted position which allows a cover lid to be opened.

Patent EP0709283A1 discloses a storage case comprising a releasing lever which is used to uncouple the storage case from the chassis of the motorcycle and a handle for transportation which in its rest position surrounds the releasing lever so that this releasing lever remains inaccessible. The storage case further comprises an opening lever which can be pulled outwards, following opening of a lock, to open a cover lid.

It is therefore clear that there is the need to obtain a storage case for a motorcycle that can be coupled and uncoupled to the chassis of the motorcycle by actuating the handle with which the user attaches the storage case itself, and which at the same time is safer.

### Description of the invention

The purpose of the present invention is to provide a storage case for a motorcycle, in particular a storage case for a motorcycle which solves the above drawbacks and has the advantages described below.

In accordance with this objective, according to a first aspect, the present invention provides a storage case for a motorcycle according to claim 1.

According to a second aspect, the present invention provides a motorcycle comprising the claimed storage case.

In the present invention, the user can hold the handle of the storage case to conveniently uncouple the storage case from the chassis of the motorcycle and use the same handle to couple the storage case back to the chassis. In order to carry out the coupling it is necessary for the user to manipulate the lid closing and opening means to free up the space that the handle should occupy, and subsequently allow said same lid closing and opening means to interact with the body of the handle in the active closing position to lock the actuation of the handle. Thanks to these features, the chances of the storage case being accidentally uncoupled from the motorcycle chassis are significantly reduced, since the lid closing and opening means interact with the handle in its retracted position, blocking the handle to prevent accidental actuation during driving.

In the present invention, the at least one component of the lid closing and opening means is mounted on the base body of the storage case to interact by overlapping, or by mutual fitting, with a portion of the handle body when that handle is in its retracted position and the closing and opening means are in the active closing position of the lid.

Advantageously, the at least one component of the lid closing and opening means is mounted on the base body of the storage case to interact by fitting with a portion of the body of the handle when a portion of the body of this component is at least partially inserted into the body of the handle, when the handle is in its retracted position and said lid closing and opening means are in the active closing position of the lid.

According to one embodiment, the lid closing and opening means comprise a lid fastening device, and a lid closing and opening mechanism which is operationally connected to said fastening device, said lid closing and opening mechanism including an articulated piece operationally connected to a fastening element in order to be able to move said fastening element to an active position for closing the lid, and said articulated piece being mounted to interact with the portion of the body of the holding handle so as to block actuation of the holding handle when the holding handle is in its retracted position and the lid fastening element in the closing position. For example, the articulated piece is mounted to overlap a portion of the handle body when the handle is in its retracted position and the fastening element in the closed position.

According to the same embodiment, the articulated piece of the lid opening and closing mechanism is configured as a lever operationally connected to the lid fastening element through a connecting rod that allows the rotating movement of the lever to be transformed into a linear movement of the lid fastening element.

Advantageously, said lever of the lid opening and closing mechanism is mounted articulated on a support that is attached to the base body of the storage case in such a way that a portion of the lever itself may overlap a portion of the handle body when the handle is in the retracted position. In this overlapping position, the articulated piece, or lever, of the lid opening and closing mechanism keeps the lid fastening element in the active closing position, while locking or blocking the handle to prevent the accidental uncoupling of the storage case during the driving of the motorcycle.

Preferably, the lever, or articulated piece, of the lid closing and opening mechanism includes a key lock intended to lock actuation of the lever.

Preferably or optionally, the lid closing and opening mechanism is operationally connected to the fastening device and said fastening device includes a carriage linked to the lid fastening element, said carriage being mounted movable on a support fixed to the base body of the storage case, a portion of said carriage being susceptible to overlap a portion of the body of the handle, or being susceptible to fit into a portion of the body of the handle, when said handle is in its retracted transport position and said carriage is actuated by the opening and closing mechanism to close the lid. For example, for one embodiment, a portion or protrusion of the carriage body of the fastening device may be inserted into a portion of the handle body when the handle is in the retracted transport position. Alternatively, a portion or protrusion of the handle body may be inserted into a portion of the carriage body of the fastening device when the handle is in its retracted transport position.

The lid fastening device has the advantage of including a carriage that is mounted on a support fixed to the base body of the case. This carriage is operationally connected to the lid opening and closing mechanism in such a way that it is susceptible to move, when the opening and closing mechanism is actuated, to close the lid and overlap a portion of the handle body, or to fit into a portion of the handle body, when the handle is in the retracted position. In this overlapping or fitting position, the opening and closing mechanism keeps the lid in the active closing position while a portion of the carriage blocks the actuation of the handle to prevent the accidental uncoupling of the case during driving.

For one embodiment, the carriage of the fastening device is linked to a lid fastening element or hook by means of said articulated piece or lever and, preferably, this carriage is mounted on the axes of a support fixed to the base body of the storage case in such a way that it can be moved horizontally to overlap, or fit into, the portion of the body of the handle when an user actuates the lever of the lid opening and closing mechanism to close the lid.

The carriage itself is susceptible to being moved horizontally away from the handle upon release of the body portion of the handle when a user actuates the articulated piece, or lever, of the lid opening and closing mechanism to open the lid. In this way, the storage case handle can be released to be positioned in an extended position that allows the storage case to be uncoupled from the motorcycle chassis.

Advantageously, the lid fastening hook or element is integrally attached to one end of the carriage of the fastening device, and preferably, this carriage includes slotted holes configured to guide the vertical movement of the carriage over the axes of the base body support of the storage case to a position susceptible to release the lid fastening hook or element, when an user actuates the opening and closing mechanism to open the lid.

According to one embodiment, the holding handle of the storage case is articulated attached to a structural module of the base body of the storage case provided with a cavity to receive in its interior at least the portion of the body of the handle that interacts with the lid closing and opening means.

Preferably, the lid opening and closing mechanism and the lid fastening device are mounted on the structural module of the base body of the case.

Advantageously, this structural module of the storage case base body is integrated into at least one wall of the storage case base body and, preferably, the handle body is configured in such a way that it shapes the outer contour of the at least one wall of the storage case base body inside the cavity of said structural module.

Thanks to these features, a very compact storage case design is obtained, which is also very safe, since the handle can be housed inside the cavity of the structural module in a retracted position, ready for the driving of the motorcycle. In this retracted position, the actuation of the handle is blocked by the interaction of a portion of the carriage of the lid fastening device and/or by the interaction of the lever of the lid opening and closing mechanism.

Preferably, the handle is operationally connected to the retaining element associated with the structural module of the base body of the storage case, said retaining element being susceptible to couple to a support of the motorcycle chassis when a user actuates the handle on its retracted position for the driving of the motorcycle, and said handle being susceptible upon being actuated to its extended position to retract the retaining element and release the storage case from the motorcycle chassis.

Again, preferably at least one of the walls of the base body of the storage case is made of metal, preferably a metal comprising aluminium. For example, according to a preferred embodiment, one, several or all the walls of the base body of the storage case are made of aluminium and, advantageously, the at least one of these metal walls integrates the plastic structural module configured to receive a portion of the handle.

Unlocking or locking shall be understood preferably the action of unlocking or locking by using a key lock.

### Brief description of the drawings

In order to better understand the description made, a set of drawings has been provided which, schematically and solely by way of non-limiting example, represents a practical embodiment of the storage case.
Figure 1 is a perspective view of one embodiment of the storage case of the present invention showing the hook of the fastening device in an active closing position and the handle in a retracted position for the driving of the motorcycle.
Figures 2a and 2b show, respectively, a rear perspective view of the storage case in Figure 1 and a detailed view of the retaining element operationally connected to the handle that allows the storage case to be coupled to the motorcycle chassis.
Figures 3, 4 and 5 represent the steps to be carried out in order to couple and uncouple the storage case to the motorcycle chassis.
Figures 6a and 6b show, respectively, a rear perspective view of the storage case of the present invention in which the handle is in an extended position, and a detailed view showing the position acquired by the retaining element operationally connected to the handle to release the storage case from the motorcycle chassis.
Figures 7, 8 and 9 represent the steps to open the storage case lid.
Figure 10 shows a perspective view of a detail of the structural module provided with a cavity that receives the handle of the storage case.
Figures 11 to 13 show detailed views of the lid fastening device and the lid opening and closing mechanism operationally connected to this fastening device.
Figure 14 shows a perspective view of the structural module in Figure 10 that incorporates the lid closing and opening means of the storage case.

### Description of a preferred embodiment

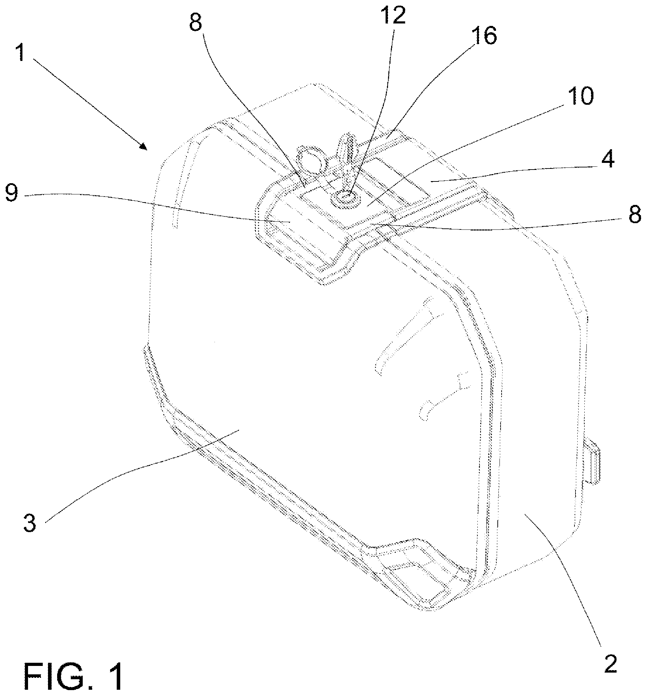

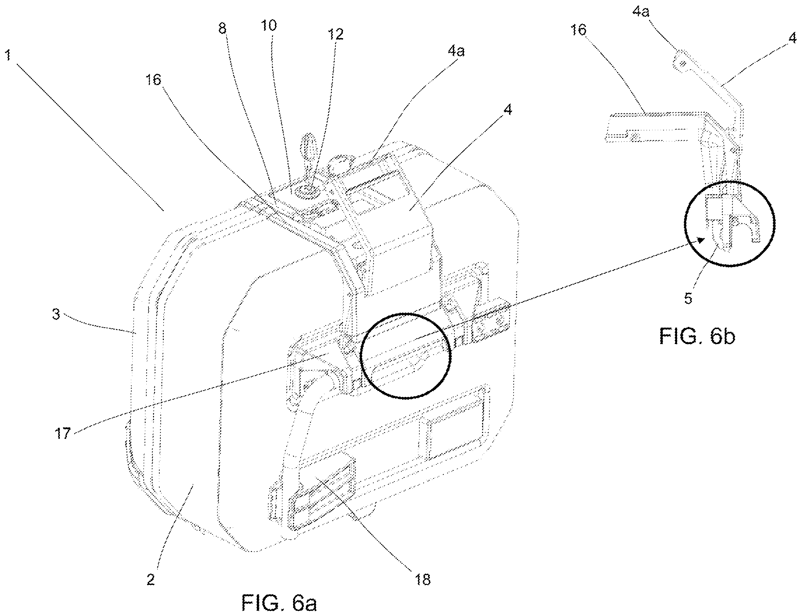

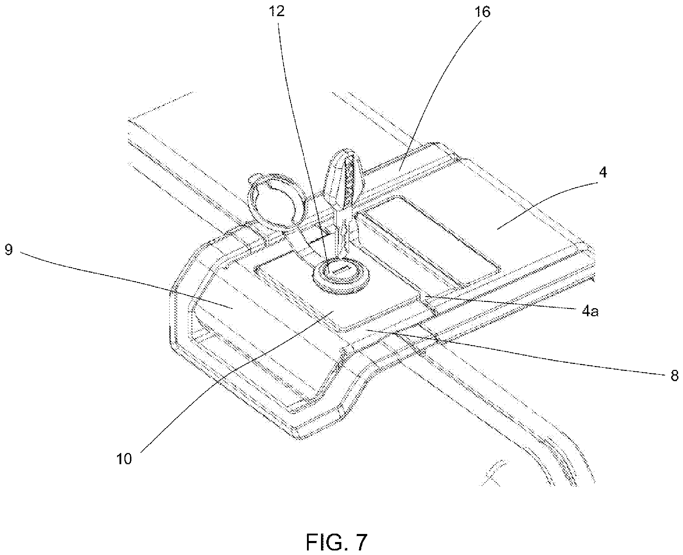

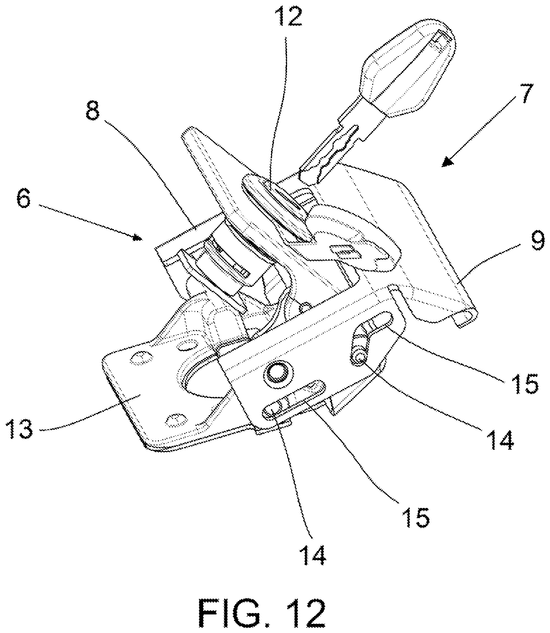

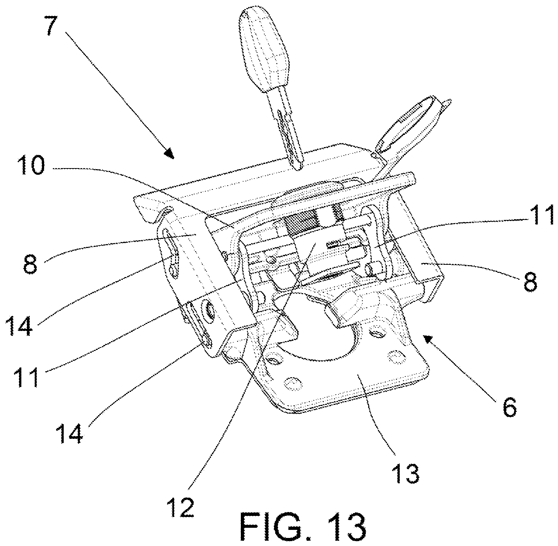

A preferred embodiment of the present invention is described below with reference to Figures 1 to 14. This preferred embodiment is particularly suitable for storage cases 1 configured with a base body 2 and a lid 3 whose walls are made of metal. In a particularly preferred way, the description of this embodiment refers to storage cases 1 with a base body 2 and a lid 3 manufactured from metal, such as aluminium.

The storage case 1 of the present invention comprises a base body 2 as a container, a lid 3 articulated to the said base body 2, means for opening and closing the lid 3 and a handle 4 articulated to the base body 2 of the storage case 1 which is operationally connected to a retaining element 5 arranged to fasten the storage case 1 to the chassis of the motorcycle (the latter not represented).

In the embodiment described above, the lid closing and opening means include an opening and closing mechanism 6 operationally connected to a lid fastening device 7. The lid fastening device 7 includes a movable carriage 8 linked to a fastening hook 9 of the lid 3, and the lid closing and opening mechanism 6 includes a lever 10 and connecting rod 11 mechanism connected to the carriage 8 to actuate its horizontal displacement on a support 13 that is fixed to the base body 2 of the storage case, when opening or closing the lid 3.

The storage case 1 of this invention is characterised by the fact that the means for opening and closing the lid 3 are mounted on the base body 2 of the storage case 1 to interact with at least a portion 4a of the body of the handle 4 when the handle 4 is in a retracted position and the closing and opening means are in an active position for closing the lid 3 (see Figures 1, 2a, 2b and 7).

In the position shown in Figures 1, 2a, 2b and 7, the opening and closing means of the lid 3 interact by overlapping with the body of the handle 4, blocking its actuation and, consequently, blocking the uncoupling of the retaining element 5 that fastens the storage case 1 to the motorcycle chassis.

Thanks to this, the storage case 1 of the present invention presents the advantage that it can be coupled and uncoupled to the chassis of the motorcycle actuating the handle 4 with which the user attaches the storage case 1 itself. At the same time, the possibilities of the storage case 1 accidentally uncoupling from the chassis are very significantly reduced. This is because the means for opening and closing the lid prevent the handle 4 from being actuated to an extended position, once the storage case 1 is already coupled to the chassis support.

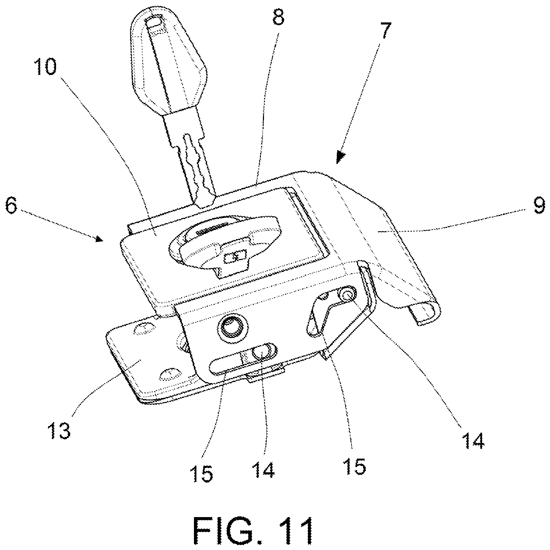

As can be seen in the detailed views of Figures 11 to 13, the lid opening and closing mechanism 6 comprises an articulated piece in the form of a lever 10 operationally connected to the movable carriage 8 of the fastening device 7, through the connecting rod 11, to transform the rotating movement of the lever 10 into a linear movement of the carriage 8 linked to the lid fastening hook 9. The lever 10 includes a key lock 12 and is mounted articulated in a support 13 that is integrally attached to the base body 2 of the storage case 1. This support 13 presents a pair of axes 14 that act as a guide for the horizontal and vertical movement of the carriage 8 along some slotted holes 15 configured for this purpose in the walls of the movable carriage 8.

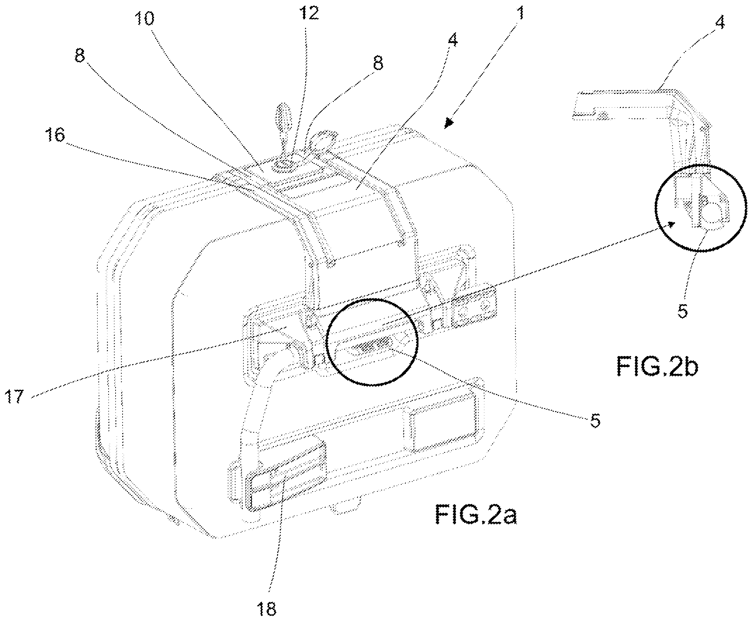

For one embodiment, the carriage 8 can be mounted on the support 13 of the lid opening and closing mechanism 6 in such a way that two portions of the body of the carriage 8 can interact by overlapping, or by fitting, with two portions 4a of the handle 4 when the carriage 8 is moved on the guide axes 14 of the support 13, when a user actuates the lever 10 and connecting rod 11 mechanism 6 to close the lid 3. In this overlapping or fitting position, the fastening hook 9 linked to the carriage 8 is in the active closing position of the lid 3 (see Figures 1 and 2a).

In addition, the lever 10 is mounted in such a way that a portion of the body of the lever 10 interacts by overlapping with a portion 4a of the body of the handle 4, when the user actuates the lever 10 and connecting rod 11 mechanism 6 to close the lid 3. Thus, in addition to the two portions of the carriage 8 body, a portion of the body of the lever 10 also interacts with the body of the handle 4 to block or lock the actuation of the handle 4 (see Figures 1, 2a and 7 again).

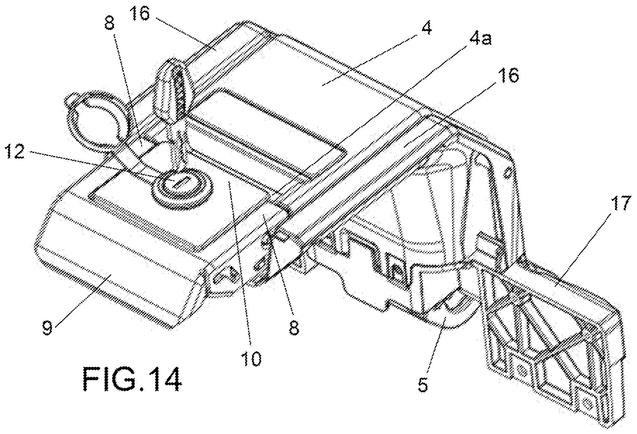

The handle 4 of the storage case 1 is attached articulated to a structural module 16 of the base body 2 of the storage case 1. This structural module 16 is provided with a cavity to receive in its interior at least a portion of the body of the handle 4 and the lid closing and opening means that interact with the portion 4a of the handle 4 when the handle 4 is in a retracted position (see Figure 14).

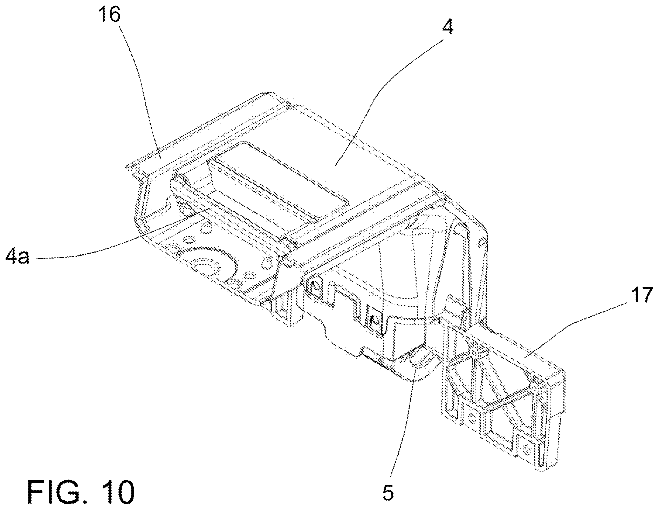

Preferably, the structural module 16 is integrated in at least one wall of the base body 2 of the storage case 1, and the body of the handle 4 is configured in such a way that in the retracted transport position of the motorcycle it shapes the external contour of at least one wall of the base body 2, inside the cavity of the structural module 16 (see Figures 2 and 10). This results in a storage case 1 with a very compact and safe design, which is free of protruding edges.

Figures 2a and 2b show how the handle 4 is operationally connected to a retaining element 5 that fastens the storage case 1 to an "L" shaped side support of the motorcycle chassis (not shown). In the embodiment shown in these Figures 2a, 2b, the storage case 1 comprises a U-shaped clamp 18 arranged on one side of the base body 2, which is capable of being coupled laterally with the ability to turn and lateral pivot in a substantially vertical section of the side support fixed to the chassis of the motorcycle. In the same side of the body 2 of the storage case 1 two support bodies 17 have been foreseen to be coupled on a substantially horizontal section of the same support, following rotation and lateral pivoting of the storage case 1. The position of the three support points described above is fixed to the side support of the chassis by means of the retaining element 5 which is operationally connected to the handle 4.

The lateral fastening system described in the previous paragraph is the subject of European patent EP3121097B1, in the name of the same owner of the present application.

In the storage case 1 of the present invention, the retaining element 5 of the storage case 1 is susceptible of being coupled to a support configured to adapt to a lateral fastening system as described in the aforementioned patent, or of being coupled to a different fastening system, which allows, for example, the fastening of the storage case 1 in a support horizontally arranged on the back of the motorcycle.

Below is a detailed description of the steps involved in coupling and uncoupling the storage case 1 of this invention to an "L" shaped side support of a motorcycle chassis.

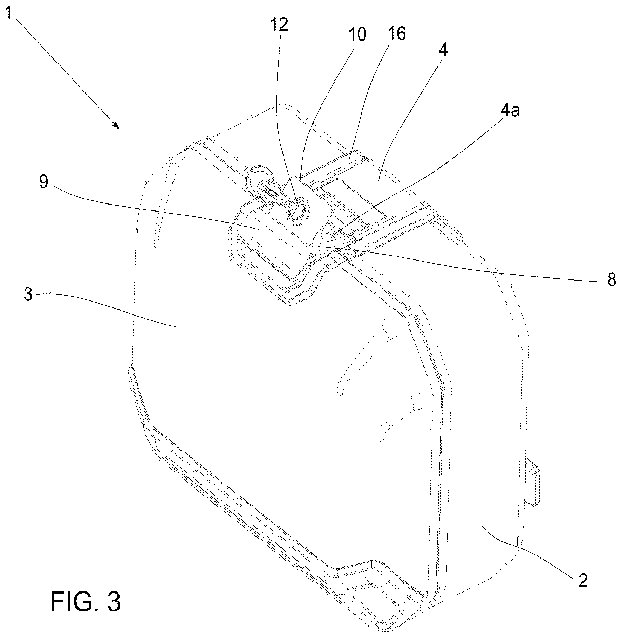

When the user wishes to remove the storage case 1 from the motorcycle, the first step is to turn the key and then actuate the lever 10 of the opening and closing mechanism 6 that is operationally connected, through the connecting rod 11, to the carriage 8 of the lid fastening device 7. In this way, the carriage 8 moves horizontally on the guide axes 14 of the support 13 of the closing and opening mechanism 6, enough so that the portion of the carriage 8 that interacts with the handle 4 is removed to release the handle 4 (see Figure 3).

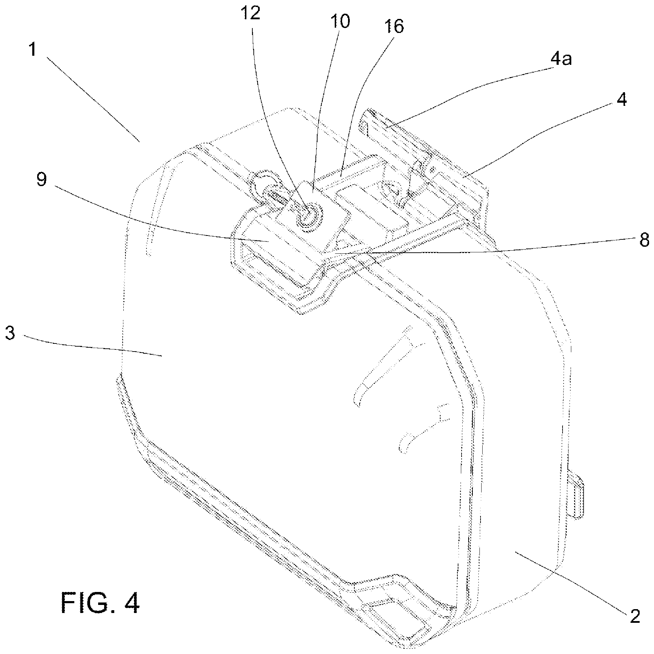

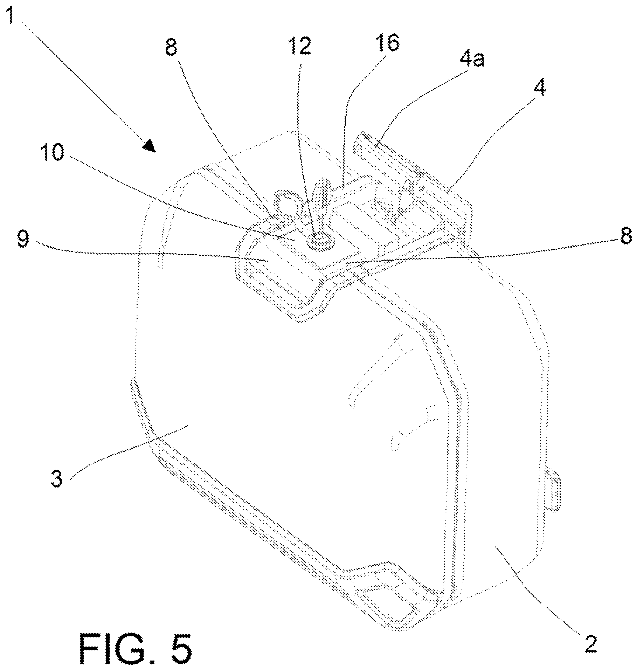

The user can then hold and actuate the handle 4 to an extended position in which the retaining element 5 acquires a retracted position which releases the storage case 1 from the motorcycle chassis support (see Figure 4). While the user with one hand holds the storage case 1 by the handle 4, with the other hand the user can actuate in the opposite direction the lever 10 to again move the carriage 8, and the fastening hook 9 that is linked to it, to an active closing position of the lid 3 (see Figure 5). At this moment the storage case 1 is ready, and with the lid 3 closed, for the user to carry it anywhere.

When the user wishes to couple the storage case 1 to the side support of the motorcycle chassis, the user must first bring the storage case 1 laterally towards the motorcycle support and proceed to fit the U-shaped clamp 18 of the base body 2 on the substantially vertical section of the support. To do this the user turns the storage case 1 around this section to partially face the base body 2 on the support. Next, the storage case 1 is pivoted laterally on the contact point of the clamp 18 with respect to the vertical section of the support, until a position is located that facilitates the insertion of the support body 17 on the substantially horizontal section of the same lateral support of the chassis, with the clamp 18 being able to slide along the substantially vertical section if necessary.

Once the support body 17 has been inserted into the lateral support of the chassis, the user can move the handle 4 to a retracted position to actuate the retaining element 5 which is coupled to the substantially horizontal section of the support to fasten the storage case 1. However, in the storage case 1 of this invention, the handle 4 cannot rotate into a retracted position (which actuates the coupling of the retaining element 5) unless the user actuates the opening and closing mechanism 6 of the storage case 1 to free up the space occupied by a portion of the carriage 8 linked to the lid fastening hook 9. After returning the handle 4 to the retracted position, the user can actuate the lever 10 again to move the carriage 8, and the lid fastening hook 9 linked to it, to an active closing position. In this active closing position, a portion of the carriage 8 interacts again by overlapping, or by fitting, with a portion 4a of the handle 4, securing the lock of the handle 4 during the driving of the motorcycle.

The steps to open and close the lid 3 of the storage case 1 are described in detail below.

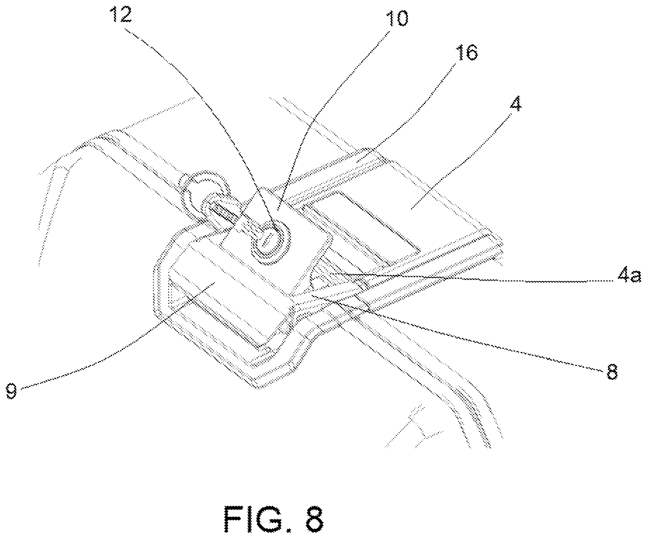

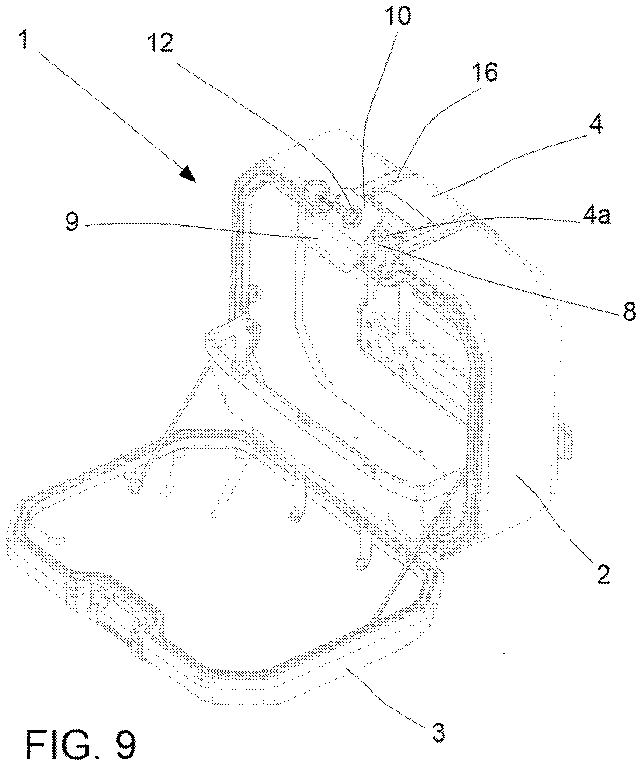

When the user wants to open the storage case 1, the first step is to turn the key of the key lock 12 to be able to actuate the lever 10 of the opening and closing mechanism 6. The actuation of the lever 10 moves horizontally and vertically the carriage 8 linked to the lid fastening hook 9 on the guide axes 14 of the support 13 of the opening and closing mechanism 6, which is fixed to the base body 2 of the storage case 1 (see Figure 8). As already mentioned, the guide axes 14 are mounted in the slotted holes 15 in the walls of the same carriage 8, configured to allow the horizontal and vertical movement of the carriage 8 and the lid fastening hook 9 linked to it. Once the lid fastening hook 9 acquires the advanced position that allows the lid 3 to be released, the user can open the storage case 1 to access the content of its interior (see Figure 9).

Although reference has been made to a specific embodiment of the invention, it is clear to a person skilled in the art that the storage case 1 described is susceptible to numerous variations and modifications, and that all the details mentioned can be replaced by others that are technically equivalent, without departing from the scope of protection defined by the attached claims. For example, although a particularly suitable construction has been described for cases comprising a base body of metal walls, such as aluminium, similar results of the invention could be obtained if the walls of the base body of the storage case were of a material other than metal. Similarly, although a fastening device has been described which includes a carriage linked to a lid fastening hook, similar results could be obtained if the fastening device had a different configuration.

## Claims

1. Storage case (1) for a motorcycle comprising a base body (2) as a container, a lid (3) articulated to the base body (2), lid closing and opening means (6, 7, 8, 9, 10, 11, 12, 13), and a holding handle (4) articulated to the base body (2) of the storage case (1) **characterised in that** the holding handle (4) is operationally connected to a retaining element (5) arranged to fasten the storage case (1) to the chassis of the motorcycle so that a user can hold the holding handle (4) in an extended position to retract the retaining element (5) and release the storage case (1) from the chassis of the motorcycle, and use the same holding handle (4) to couple the storage case (1) back to the chassis of the motorcycle when the user actuates said holding handle (4) to a retracted position to couple the retaining element (5) to the chassis of the motorcycle, wherein said lid closing and opening means (6, 7, 8, 9, 10, 11, 12, 13) are mounted on the base body (2) of the storage case (1) to interact with at least a portion (4a) of the body of the holding handle (4) when said holding handle (4) is in its retracted position and said lid closing and opening means (6, 7, 8, 9, 10, 11, 12, 13) are in an active closing position of the lid (3), at least one component of said lid closing and opening means being mounted so that it is susceptible of blocking the actuation of the holding handle (4) when the holding handle (4) is in its retracted position, and wherein said at least one component of the lid closing and opening means (6, 7, 8, 9, 10, 11, 12, 13) is mounted on the base body (2) of the storage case (1) to interact by overlapping, or by mutual fitting, with the portion (4a) of the body of the holding handle (4) when the holding handle (4) is in its retracted position and said lid closing and opening means (6, 7, 8, 9, 10, 11, 12, 13) are in the active closing position of the lid (3) to prevent accidental uncoupling of the storage case during driving of the motorcycle in case the lid closing and opening means (6, 7, 8, 9, 10, 11, 12, 13) remain unlocked.

2. Storage case (1) according to claim 1, wherein the at least one component of the lid closing and opening means (6, 7, 8, 9, 10, 11, 12, 13) is mounted on the base body (2) of the storage case (1) to interact with the portion of the body of the holding handle (4) when a portion of the body of that component is at least partially inserted into the portion of the body of the holding handle (4) when said holding handle (4) is in its retracted position and said lid closing and opening means (6, 7, 8, 9, 10, 11, 12, 13) are in the active closing position of the lid (3).

3. Storage case according to any of the claims 1 to 2, wherein the lid closing and opening means (6, 7, 8, 9, 10, 11, 12, 13) comprise a lid fastening device (7), and a lid closing and opening mechanism (6) which is operationally connected to said lid fastening device (7), said lid closing and opening mechanism (6) including an articulated piece (10) that is operationally connected to a lid fastening element (9) of the fastening device (7) to move said lid fastening element (9) to the active closing position of the lid (3), and said articulated piece (10) being mounted to be able to interact with the portion (4a) of the body of the holding handle (4) so as to block actuation of the holding handle (4) when the holding handle (4) is in its retracted position and the lid fastening element (9) in the closing position.

4. Storage case according to claim 3, wherein the articulated piece (10) is mounted to be able to overlap the portion (4a) of the body of the holding handle (4) so as to block actuation of the holding handle (4) when the holding handle (4) is in its retracted position and the lid fastening element (9) in the closing position.

5. Storage case according to any of the claims 3 to 4, wherein said fastening device (7) includes a carriage (8) linked to the lid fastening element (9) and mounted movable on a support (13) fixed to the base body (2) of the storage case, a portion of said carriage (8) being susceptible to overlap the portion (4a) of the body of the holding handle (4), or being susceptible to fit into the portion (4a) of the body of the holding handle (4), when said holding handle (4) is in its retracted position and the carriage (8) of the fastening device (7) is actuated to close the lid (3).

6. Storage case (1) according to any of the claims 3 to 5, wherein the articulated piece of the lid closing and opening mechanism (6) is configured as a lever (10) operationally connected to the lid fastening element (9) through a connecting rod (11) that allows the rotary movement of this lever (10) to be transformed into a linear movement of the lid fastening element (9).

7. Storage case (1) according to claim 5 or claim 6 when dependent of claim 5, wherein the articulated piece or lever (10) of the lid closing and opening mechanism (6) is mounted articulated on the support (13) that is fixed to the base body (2) of the storage case (1) in such a way that a portion of the articulated piece, or lever (10), can overlap the portion (4a) of the body of the holding handle (4) when the holding handle (4) is in its retracted position.

8. Storage case according to any of the claims 5 to 7, when dependent of claim 5, wherein the carriage (8) of the fastening device (7) is linked to the lid fastening element (9) which is a lid fastening hook.

9. Storage case (1) according to any of the claims 5 to 8, when dependent of claim 5, wherein the carriage (8) of the fastening device (7) is mounted on guide axes (14) of the support (13) of the base body (2) of the storage case, in such a way that it can be moved horizontally to overlap, or fit into, the portion (4a) of the body of the holding handle (4) when the user actuates the lid closing and opening mechanism (6) to close the lid (3).

10. Storage case (1) according to any of the claims 5 to 9, when dependent of claim 5, wherein the carriage (8) comprises at least one slotted hole (15) configured to guide a vertical movement of the carriage (8) of the fastening device (7) on the support (13) fixed to the base body (2) of the storage case (1), up to a position susceptible of releasing the lid fastening element (9) when the user activates the lid closing and opening mechanism (6) to open the lid (3).

11. Storage case (1) according to any of claims 3 to 4 or 6 to 7, wherein the articulated piece or lever (10) includes a key lock (12) intended to lock actuation of the articulated piece or lever (10).

12. Storage case (1) according to any of the claims 1 to 11, wherein the holding handle (4) of the storage case (1) is attached articulated to a structural module (16) of the base body (2) of the storage case (1) provided with a cavity to receive in its interior at least the portion (4a) of the body of the holding handle that interacts with the lid closing and opening means (6, 7, 8, 9, 10, 11, 12, 13) .

13. Storage case (1) according to claim 12, wherein the structural module (16) of the base body (2) of the storage case is integrated in at least one wall of the base body (2) of the storage case, and the body of the holding handle (4) is configured in such a way that it shapes the external contour of the at least one wall of the base body (2) of the storage case (1) inside the cavity of the structural module (16).

14. Storage case (1) according to claim 13, wherein the holding handle (4) is operationally connected to the retaining element (5) associated with the structural module (16) of the base body (2) of the storage case (1), said retaining element (5) being susceptible of coupling to a motorcycle chassis support when the user actuates the holding handle (4) to the retracted position, and the same holding handle (4) being susceptible of being actuated to the extended position to retract the retaining element (5) and release the storage case (1) from the motorcycle chassis.

15. Motorcycle comprising the storage case (1) according to any of the claims 1 to 14, which is attached laterally or superiorly to a support of the chassis of said motorcycle.

## Patentansprüche

1. Aufbewahrungskoffer (1) für ein Motorrad, der einen Basiskörper (2) als Behälter, einen Deckel (3), der an dem Basiskörper (2) angelenkt ist, Mittel (6, 7, 8, 9, 10, 11, 12, 13) zum Schließen und Öffnen des Deckels und einen Haltegriff (4), der an dem Basiskörper (2) des Aufbewahrungskoffers (1) angelenkt ist, umfasst, **dadurch gekennzeichnet, dass** der Haltegriff (4) betriebstechnisch mit einem Halteelement (5) verbunden ist, das angeordnet ist, den Aufbewahrungskoffer (1) an dem Rahmen des Motorrads zu befestigen, so dass ein Benutzer den Haltegriff (4) in einer ausgeklappten Position zum Zurückziehen des Halteelements (5) und zum Freigeben des Aufbewahrungskoffers (1) von dem Rahmen des Motorrads halten kann, und diesen Haltegriff (4) wieder zum Koppeln des Aufbewahrungskoffers (1) mit dem Rahmen des Motorrads verwenden kann, wenn der Benutzer den Haltegriff (4) in eine zurückgeklappte Position bringt, um das Halteelement (5) mit dem Rahmen des Motorrads zu koppeln, wobei die Mittel (6, 7, 8, 9, 10, 11, 12, 13) zum Schließen und Öffnen des Deckels an dem Basiskörper (2) des Aufbewahrungskoffers (1) so montiert sind, dass sie mit wenigstens einem Abschnitt (4a) des Körpers des Haltegriffs (4) zusammenwirken, wenn der Haltegriff (4) in seiner zurückgeklappten Position ist und die Mittel (6, 7, 8, 9, 10, 11, 12, 13) zum Schließen und Öffnen des Deckels in einer aktiven Schließposition des Deckels (3) sind, wobei wenigstens eine Komponente der Mittel zum Schließen und Öffnen des Deckels so montiert sind, dass sie die Betätigung des Haltegriffs (4) blockieren können, wenn der Haltegriff (4) in seiner zurückgeklappten Position ist, und wobei die wenigstens eine Komponente der Mittel (6, 7, 8, 9, 10, 11, 12, 13) zum Schließen und Öffnen des Deckels an dem Basiskörper (2) des Aufbewahrungskoffers (1) montiert ist, um mit dem Abschnitt (4a) des Körpers des Haltegriffs (4) durch Überlappung oder gegenseitiges Einsetzen zusammenzuwirken, wenn der Haltegriff (4) in seiner zurückgeklappten Position ist und die Mittel (6, 7, 8, 9, 10, 11, 12, 13) zum Schließen und Öffnen des Deckels in der aktiven Schließposition des Deckels (3) sind, um ein versehentliches Entkoppeln des Aufbewahrungskoffers während des Fahrens des Motorrads zu verhindern, falls die Mittel (6, 7, 8, 9, 10, 11, 12, 13) zum Schließen und Öffnen des Deckels unverriegelt bleiben.

2. Aufbewahrungskoffer (1) nach Anspruch 1, wobei die wenigstens eine Komponente der Mittel (6, 7, 8, 9, 10, 11, 12, 13) zum Schließen und Öffnen des Deckels an dem Basiskörper (2) des Aufbewahrungskoffers (1) montiert sind, um mit dem Abschnitt des Körpers des Haltegriffs (4) zusammenzuwirken, wenn ein Abschnitt des Körpers dieser Komponente wenigstens teilweise in den Abschnitt des Körpers des Haltegriffs (4) eingesetzt wird, wenn der Haltegriff (4) in seiner zurückgeklappten Position ist und die Mittel (6, 7, 8, 9, 10, 11, 12, 13) zum Schließen und Öffnen des Deckels in der aktiven Schließposition des Deckels (3) sind.

3. Aufbewahrungskoffer nach einem der Ansprüche 1 bis 2, wobei die Mittel (6, 7, 8, 9, 10, 11, 12, 13) zum Schließen und Öffnen des Deckels eine Deckelbefestigungsvorrichtung (7) und einen Mechanismus (6) zum Schließen und Öffnen des Deckels, der mit der Deckelbefestigungsvorrichtung (7) betriebstechnisch verbunden ist, umfassen, wobei der Mechanismus (6) zum Schließen und Öffnen des Deckels ein angelenktes Teil (10) umfasst, das mit einem Deckelbefestigungselement (9) der Befestigungsvorrichtung (7) betriebstechnisch verbunden ist, um das Deckelbefestigungselement (9) zu der aktiven Schließposition des Deckels (3) zu bewegen, und wobei das angelenkte Teil (10) so montiert ist, dass es mit dem Abschnitt (4a) des Körpers des Haltegriffs (4) zusammenwirken kann, um eine Betätigung des Haltegriffs (4) zu blockieren, wenn der Haltegriff (4) in seiner zurückgeklappten Position ist und das Deckelbefestigungselement (9) in der Schließposition ist.

4. Aufbewahrungskoffer nach Anspruch 3, wobei das angelenkte Teil (10) so montiert ist, dass es mit dem Abschnitt (4a) des Körpers des Haltegriffs (4) überlappen kann, um eine Betätigung des Haltegriffs (4) zu blockieren, wenn der Haltegriff (4) in seiner zurückgeklappten Position ist und das Deckelbefestigungselement (9) in der Schließposition ist.

5. Aufbewahrungskoffer nach einem der Ansprüche 3 bis 4, wobei die Befestigungsvorrichtung (7) einen Schlitten (8) umfasst, der mit dem Deckelbefestigungselement (9) verbunden ist und beweglich auf einer Halterung (13) montiert ist, die an dem Basiskörper (2) des Aufbewahrungskoffers fixiert ist, wobei ein Abschnitt des Schlittens (8) mit dem Abschnitt (4a) des Körpers des Haltegriffs (4) überlappen kann oder in den Abschnitt (4a) des Körpers des Haltegriffs (4) eingesetzt werden kann, wenn der Haltegriff (4) in seiner zurückgeklappten Position ist und der Schlitten (8) der Befestigungsvorrichtung (7) betätigt wird, um den Deckel (3) zu schließen.

6. Aufbewahrungskoffer (1) nach einem der Ansprüche 3 bis 5, wobei das angelenkte Teil des Mechanismus (6) zum Schließen und Öffnen des Deckels als ein Hebel (10) konfiguriert ist, der mit dem Deckelbefestigungselement (9) durch eine Verbindungsstange (11) betriebstechnisch verbunden ist, so dass die Drehbewegung des Hebels (10) in eine geradlinige Bewegung des Deckelbefestigungselements (9) transformiert werden kann.

7. Aufbewahrungskoffer (1) nach Anspruch 5 oder nach Anspruch 6, wenn abhängig von Anspruch 5, wobei das angelenkte Teil oder der Hebel (10) des Mechanismus (6) zum Schließen und Öffnen des Deckels an der Halterung (13) angelenkt montiert ist, die so an dem Basiskörper (2) des Aufbewahrungskoffers (1) befestigt ist, dass ein Abschnitt des angelenkten Teils oder des Hebels (10) mit dem Abschnitt (4a) des Körpers des Haltegriffs (4) überlappen kann, wenn der Haltegriff (4) in seiner zurückgeklappten Position ist.

8. Aufbewahrungskoffer nach einem der Ansprüche 5 bis 7, wenn abhängig von Anspruch 5, wobei der Schlitten (8) der Befestigungsvorrichtung (7) mit dem Deckelbefestigungselement (9), das ein Deckelbefestigungshaken ist, verbunden ist.

9. Aufbewahrungskoffer (1) nach einem der Ansprüche 5 bis 8, wenn abhängig von Anspruch 5, wobei der Schlitten (8) der Befestigungsvorrichtung (7) so auf Führungsachsen (14) der Halterung (13) des Basiskörpers (2) des Aufbewahrungskoffers montiert ist, dass er horizontal bewegt werden kann, so dass er mit dem Abschnitt (4a) des Körpers des Haltegriffs (4) überlappt oder in diesen passt, wenn der Benutzer den Mechanismus (6) zum Schließen und Öffnen des Deckels betätigt, um den Deckel (3) zu schließen.

10. Aufbewahrungskoffer (1) nach einem der Ansprüche 5 bis 9, wenn abhängig von Anspruch 5, wobei der Schlitten (8) wenigstens ein geschlitztes Loch (15) umfasst, das konfiguriert ist, eine vertikale Bewegung des Schlittens (8) der Befestigungsvorrichtung (7) auf der Halterung (13), die am Basiskörper (2) des Aufbewahrungskoffers (1) fixiert ist, bis zu einer Position zu führen, in der das Deckelbefestigungselement (9) freigegeben werden kann, wenn der Benutzer den Mechanismus (6) zum Schließen und Öffnen des Deckels aktiviert, um den Deckel (3) zu öffnen.

11. Aufbewahrungskoffer (1) nach einem der Ansprüche 3 bis 4 oder 6 bis 7, wobei das angelenkte Teil oder der Hebel (10) ein Schlüsselschloss (12) umfasst, das dazu vorgesehen ist, eine Betätigung des angelekten Teils oder des Hebels (10) zu sperren.

12. Aufbewahrungskoffer (1) nach einem der Ansprüche 1 bis 11, wobei der Haltegriff (4) des Aufbewahrungskoffers (1) an einem Strukturmodul (16) des Basiskörpers (2) des Aufbewahrungskoffers (1) angelenkt befestigt ist, das mit einem Hohlraum versehen ist, um in seinem Inneren wenigstens den Abschnitt (4a) des Körpers des Haltegriffs, der mit den Mitteln (6, 7, 8, 9, 10, 11, 12, 13) zum Schließen und Öffnen des Deckels zusammenwirkt, aufzunehmen.

13. Aufbewahrungskoffer (1) nach Anspruch 12, wobei das Strukturmodul (16) des Basiskörpers (2) des Aufbewahrungskoffers integral mit wenigstens einer Wand des Basiskörpers (2) des Aufbewahrungskoffers ist, und wobei der Körper des Haltegriffs (4) so konfiguriert ist, dass er den äußeren Umriss der wenigstens einen Wand des Basiskörpers (2) des Aufbewahrungskoffers (1) im Inneren des Hohlraums des Strukturmoduls (16) bildet.

14. Aufbewahrungskoffer (1) nach Anspruch 13, wobei der Haltegriff (4) mit dem Halteelement (5), das mit dem Strukturmodul (16) des Basiskörpers (2) des Aufbewahrungskoffers (1) assoziiert ist, betriebstechnisch verbunden ist, wobei das Haltelement (5) mit einem Motorradrahmenträger koppeln kann, wenn der Benutzer den Haltegriff (4) in die zurückgeklappte Position bringt, und wobei der gleiche Haltegriff (4) zur ausgeklappten Position gebracht werden kann, um das Halteelement (5) zurückzuziehen und den Aufbewahrungskoffer (1) vom Motorradrahmen freizugeben.

15. Motorrad, das den Aufbewahrungskoffer (1) nach einem der Ansprüche 1 bis 14 umfasst, der seitlich oder oberhalb eines Trägers des Rahmens des Motorrads befestigt ist.

## Revendications

1. Coffre de rangement (1) pour une motocyclette comprenant un corps de base (2) en tant que contenant, un couvercle (3) articulé sur le corps de base (2), des moyens de fermeture et d'ouverture de couvercle (6, 7, 8, 9, 10, 11, 12, 13) et une poignée de préhension (4) articulée sur le corps de base (2) du coffre de rangement (1), **caractérisé en ce que** la poignée de préhension (4) est reliée de manière opérationnelle à un élément de retenue (5) agencé pour fixer le coffre de rangement (1) au châssis de la motocyclette de telle sorte qu'un utilisateur puisse tenir la poignée de préhension (4) dans une position déployée pour rétracter l'élément de retenue (5) et libérer le coffre de rangement (1) à partir du châssis de la motocyclette, et utiliser la même poignée de préhension (4) pour coupler le coffre de rangement (1) au châssis de la motocyclette lorsque l'utilisateur actionne ladite poignée de préhension (4) vers une position rétractée pour coupler l'élément de retenue (5) au châssis de la motocyclette, dans lequel lesdits moyens de fermeture et d'ouverture de couvercle (6, 7, 8, 9, 10, 11, 12, 13) sont montés sur le corps de base (2) du coffre de rangement (1) pour interagir avec au moins une partie (4a) du corps de la poignée de préhension (4) lorsque ladite poignée de préhension (4) est dans sa position rétractée et lesdits moyens de fermeture et d'ouverture de couvercle (6, 7, 8, 9, 10, 11, 12, 13) sont dans une position de fermeture active du couvercle (3), au moins un composant desdits moyens de fermeture et d'ouverture de couvercle étant monté de telle sorte qu'il soit susceptible de bloquer l'actionnement de la poignée de préhension (4) lorsque la poignée de préhension (4) est dans sa position rétractée, et dans lequel ledit au moins un composant des moyens de fermeture et d'ouverture de couvercle (6, 7, 8, 9, 10, 11, 12, 13) est monté sur le corps de base (2) du coffre de rangement (1) pour interagir par chevauchement, ou par ajustement mutuel, avec la partie (4a) du corps de la poignée de préhension (4) lorsque la poignée de préhension (4) est dans sa position rétractée et lesdits moyens de fermeture et d'ouverture de couvercle (6, 7, 8, 9, 10, 11, 12, 13) sont dans la position de fermeture active du couvercle (3) pour empêcher un découplage accidentel du coffre de rangement pendant une conduite de la motocyclette dans un cas où les moyens de fermeture et d'ouverture de couvercle (6, 7, 8, 9, 10, 11, 12, 13) restent déverrouillés.

2. Coffre de rangement (1) selon la revendication 1, dans lequel le au moins un composant des moyens de fermeture et d'ouverture de couvercle (6, 7, 8, 9, 10, 11, 12, 13) est monté sur le corps de base (2) du coffre de rangement (1) pour interagir avec la partie du corps de la poignée de préhension (4) lorsqu'une partie du corps de ce composant est insérée au moins partiellement dans la partie du corps de la poignée de préhension (4) lorsque ladite poignée de préhension (4) est dans sa position rétractée et lesdits moyens de fermeture et d'ouverture de couvercle (6, 7, 8, 9, 10, 11, 12, 13) sont dans la position de fermeture active du couvercle (3).

3. Coffre de rangement selon l'une quelconque des revendications 1 à 2, dans lequel les moyens de fermeture et d'ouverture de couvercle (6, 7, 8, 9, 10, 11, 12, 13) comprennent un dispositif de fixation de couvercle (7), et un mécanisme de fermeture et d'ouverture de couvercle (6) qui est relié de manière opérationnelle audit dispositif de fixation de couvercle (7), ledit mécanisme de fermeture et d'ouverture de couvercle (6) incluant une pièce articulée (10) qui est reliée de manière opérationnelle à un élément de fixation de couvercle (9) du dispositif de fixation (7) pour déplacer ledit élément de fixation de couvercle (9) vers la position de fermeture active du couvercle (3), et ladite pièce articulée (10) étant montée pour pouvoir interagir avec la partie (4a) du corps de la poignée de préhension (4) de manière à bloquer un actionnement de la poignée de préhension (4) lorsque la poignée de préhension (4) est dans sa position rétractée et l'élément de fixation de couvercle (9) dans la position de fermeture.

4. Coffre de rangement selon la revendication 3, dans lequel la pièce articulée (10) est montée de manière à pouvoir chevaucher la partie (4a) du corps de la poignée de préhension (4) de manière à bloquer un actionnement de la poignée de préhension (4) lorsque la poignée de préhension (4) est dans sa position rétractée et l'élément de fixation de couvercle (9) dans la position de fermeture.

5. Coffre de rangement selon l'une quelconque des revendications 3 à 4, dans lequel ledit dispositif de fixation (7) inclut un chariot (8) relié à l'élément de fixation de couvercle (9) et monté mobile sur un support (13) fixé au corps de base (2) du coffre de rangement, une partie dudit chariot (8) étant susceptible de chevaucher la partie (4a) du corps de la poignée de préhension (4), ou étant susceptible de s'ajuster dans la partie (4a) du corps de la poignée de préhension (4), lorsque ladite poignée de préhension (4) est dans sa position rétractée et le chariot (8) du dispositif de fixation (7) est actionné pour fermer le couvercle (3).

6. Coffre de rangement (1) selon l'une quelconque des revendications 3 à 5, dans lequel la pièce articulée du mécanisme de fermeture et d'ouverture (6) est configurée sous la forme d'un levier (10) relié de manière opérationnelle à l'élément de fixation de couvercle (9) par l'intermédiaire d'une tige de liaison (11) qui permet au mouvement de rotation de ce levier (10) d'être transformé en un mouvement linéaire de l'élément de fixation de couvercle (9).

7. Coffre de rangement (1) selon la revendication 5 ou la revendication 6 lorsqu'elle dépend de la revendication 5, dans lequel la pièce articulée ou le levier (10) du mécanisme de fermeture et d'ouverture de couvercle (6) est monté(e) articulé(e) sur le support (13) qui est fixé(e) au corps de base (2) du coffre de rangement (1) de telle sorte qu'une partie de la pièce articulée ou du levier (10) puisse chevaucher la partie (4a) du corps de la poignée de préhension (4) lorsque la poignée de préhension (4) est dans sa position rétractée.

8. Coffre de rangement selon l'une quelconque des revendications 5 à 7, lorsqu'elle dépend de la revendication 5, dans lequel le chariot (8) du dispositif de fixation (7) est relié à l'élément de fixation de couvercle (9) qui est un crochet de fixation de couvercle.

9. Coffre de rangement (1) selon l'une quelconque des revendications 5 à 8, lorsqu'elle dépend de la revendication 5, dans lequel le chariot (8) du dispositif de fixation (7) est monté sur des axes de guidage (14) du support (13) du corps de base (2) du coffre de rangement, de telle sorte qu'il puisse être déplacé horizontalement pour chevaucher, ou s'adapter dans, la partie (4a) du corps de la poignée de préhension (4) lorsque l'utilisateur actionne le mécanisme de fermeture et d'ouverture de couvercle (6) pour fermer le couvercle (3).

10. Coffret de rangement (1) selon l'une quelconque des revendications 5 à 9, lorsqu'elle dépend de la revendication 5, dans lequel le chariot (8) comprend au moins un trou oblong (15) configuré pour guider un déplacement vertical du chariot (8) du dispositif de fixation (7) sur le support (13) fixé au corps de base (2) du coffret de rangement (1), jusqu'à une position susceptible de libérer l'élément de fixation de couvercle (9) lorsque l'utilisateur active le mécanisme de fermeture et d'ouverture de couvercle (6) pour ouvrir le couvercle (3).

11. Coffre de rangement (1) selon l'une quelconque des revendications 3 à 4 ou 6 à 7, dans lequel la pièce articulée ou le levier (10) inclut un verrou à clé (12) destiné à verrouiller un actionnement de la pièce articulée ou du levier (10).

12. Coffre de rangement (1) selon l'une quelconque des revendications 1 à 11, dans lequel la poignée de préhension (4) du coffre de rangement (1) est fixée de manière articulée à un module structurel (16) du corps de base (2) du coffre de rangement (1) pourvu d'une cavité pour recevoir en son sein au moins la partie (4a) du corps de la poignée de préhension qui interagit avec les moyens de fermeture et d'ouverture de couvercle (6, 7, 8, 9, 10, 11, 12, 13).

13. Coffre de rangement (1) selon la revendication 12, dans lequel le module structurel (16) du corps de base (2) du coffre de rangement est intégré dans au moins une paroi du corps de base (2) du coffre de rangement, et le corps de la poignée de préhension (4) est configuré de telle sorte qu'il met en forme le contour externe de la au moins une paroi du corps de base (2) du coffre de rangement (1) à l'intérieur de la cavité du module structurel (16).

14. Coffre de rangement (1) selon la revendication 13, dans lequel la poignée de préhension (4) est reliée de manière opérationnelle à l'élément de retenue (5) associé au module structurel (16) du corps de base (2) du coffre de rangement (1), ledit élément de retenue (5) étant susceptible d'être couplé à un support de châssis de motocyclette lorsque l'utilisateur actionne la poignée de préhension (4) vers la position rétractée, et la même poignée de préhension (4) étant susceptible d'être actionnée vers la position déployée pour rétracter l'élément de retenue (5) et libérer le coffre de rangement (1) à partir du châssis de motocyclette.

15. Motocyclette comprenant le coffre de rangement (1) selon l'une quelconque des revendications 1 à 14, qui est fixé latéralement ou de manière supérieure à un support du châssis de ladite motocyclette.
